(19) Europäisches Patentamt
European Patent Office
Office européen des brevets

(11) **EP 4 756 649 A1**

(12) **EUROPEAN PATENT APPLICATION**
published in accordance with Art. 153(4) EPC

(43) Date of publication:
**10.06.2026 Bulletin 2026/24**

(21) Application number: **23947522.1**

(22) Date of filing: **28.07.2023**

(51) International Patent Classification (IPC):
*G06F 18/213* (2023.01)

(52) Cooperative Patent Classification (CPC):
**G06F 18/213**

(86) International application number:
**PCT/JP2023/027881**

(87) International publication number:
**WO 2025/027723 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **MARUHASHI, Koji**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57) An information processing device obtains multiple data sets (510) each of which is a collection of data including values of x variables of the same combination. A variance-covariance matrix (520) corresponding to a k-th data set (510) is defined by a matrix B representing orthogonal components common to variance-covariance matrices (520) in the multiple data sets (510) and a diagonal matrix $Diag(c_k)$. The information processing device calculates a combination of B and $Diag(c_k)$. The information processing device calculates a combination of B and $Diag(c_k)$ forming the variance-covariance matrix (520) corresponding to the k-th data set by solving the optimization problem so as to minimize the value of an objective function.

## FIG.5

**Description**

TECHNICAL FIELD

The embodiments discussed herein are related to an information processing program, an information processing method, and an information processing device.

BACKGROUND ART

As a related art, there is a technique of identifying a dependency relationship between variables by calculating a variance-covariance matrix for a data set that includes multiple pieces of data including values of two or more variables, and performing principal component analysis, independent component analysis, causal search, or the like. Here, in a certain data set, as the total number of data is smaller than the total number of variables, it is more difficult to accurately calculate the variance-covariance matrix. Therefore, it may be desirable to calculate a variance-covariance matrix for each of multiple data sets using data sets of similar types.

In a related art, for example, a variance-covariance matrix corresponding to one data set is calculated by adding a diagonal matrix having a virtual component to a variance-covariance defined by a product of a matrix corresponding to the data set and a transposed matrix of the matrix.

Non-patent Literature 1: Ledoit, Olivier, and Wolf, Michael. "A well-conditioned estimator for large-dimensional covariance matrices." Journal of multivariate analysis 88.2 (2004): 365-411.

DISCLOSURE OF INVENTION

PROBLEM TO BE SOLVED BY THE INVENTION

However, in the related arts, it is difficult to accurately calculate a variance-covariance matrix for a data set. For example, an appropriate variance-covariance matrix for a data set is different for each data set. Therefore, it is not preferable to use data sets of similar types to calculate only one variance-covariance matrix common to multiple data sets as a variance-covariance matrix for each of the multiple data sets.

According to one aspect, an object of the present invention is to accurately calculate variance-covariance matrix for a data set.

MEANS FOR SOLVING PROBLEM

According to one aspect, an information processing program, an information processing method, and an information processing device are proposed that obtain a plurality of data sets each including a plurality of data including respective values of any two or more variables of a plurality of variables; obtain a plurality of variance-covariances respectively in the obtained plurality of data sets; and calculate, based on the plurality of variance-covariances, a combination of a first matrix representing orthogonal components common to a plurality of variance-covariance matrices respectively in the plurality of data sets and a second matrix for each of the plurality of variance-covariance matrices and representing a dependency relationship between the any two or more variables of the plurality of variables.

EFFECT OF THE INVENTION

According to one aspect, a variance-covariance matrix may be accurately calculated for a data set.

BRIEF DESCRIPTION OF DRAWINGS

Fig. 1 is an explanatory diagram depicting an example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a functional configuration of the information processing device 100.
Fig. 5 is an explanatory diagram depicting a first operation example of the information processing device 100.
Fig. 6 is an explanatory diagram depicting a second operation example of the information processing device 100.
Fig. 7 is an explanatory diagram depicting a third operation example of the information processing device 100.

Fig. 8 is an explanatory diagram depicting the third operation example of the information processing device 100.
Fig. 9 is an explanatory diagram depicting the third operation example of the information processing device 100.
Fig. 10 is a flowchart depicting an example of an overall processing procedure.
Fig. 11 is a flowchart depicting an example of an addition processing procedure.

BEST MODE(S) FOR CARRYING OUT THE INVENTION

Exemplary embodiments of an information processing program, an information processing method, and an information processing device according to the present invention will be explained below in detail with reference to the accompanying drawings.

(Example of Information Processing Method According to Embodiment)

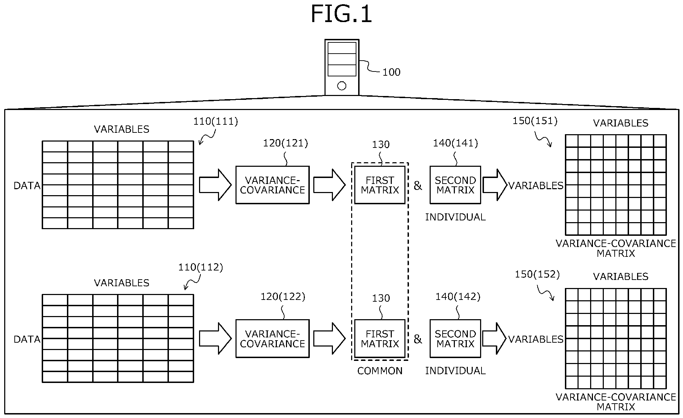

Fig. 1 is an explanatory diagram depicting an example of an information processing method according to an embodiment. The information processing device 100 is a computer for accurately calculating a variance-covariance matrix for a data set. The information processing device 100 is, for example, a server or a personal computer (PC).
The data set includes multiple pieces of data. The data includes values for each of two or more variables. The data set includes, for example, multiple pieces of data including respective values of two or more specific variables. The variance-covariance matrix represents dependency between variables. The variance-covariance matrix has, for example, a number of rows and a number of columns equal to the total number of variables. Specifically, the variance-covariance matrix represents a dependency relationship between an i-th variable and a j-th variable by a value of a component in an i-th row and a j-th column.
There may be a case where it is desired to identify a dependency relationship between variables by calculating a variance-covariance matrix for a data set and performing an analysis process such as principal component analysis, independent component analysis, or causal search.
Specifically, in the medical field, a variance-covariance matrix for a lung cancer patient data set is calculated to perform an analysis process on a gene network, and a gene that causes lung cancer to occur is investigated in some cases. The lung cancer patient data set includes, for example, multiple pieces of data including respective values of two or more variables related to genes of lung cancer patients.
Specifically, in the manufacturing field, a variance-covariance matrix for a defective product data set may be calculated to perform an analysis process on a component and investigate a component that causes a product to be defective. The defective product data set includes, for example, multiple pieces of data including respective values of two or more variables related to a component forming a product.
Here, a problem arises in that it is more difficult to accurately calculate the variance-covariance matrix the smaller the total number of data is than the total number of variables in a certain data set. Therefore, it may be desirable to calculate a variance-covariance matrix for each of multiple data sets using data sets of similar types. Specifically, it is conceivable to accurately calculate the variance-covariance matrix for the lung cancer patient data set using the colon cancer patient data set in addition to the lung cancer patient data set. The colon cancer patient data set includes, for example, multiple pieces of data including respective values of two or more variables related to genes of colon cancer patients.
However, even when data sets of similar types are used, it is difficult to accurately calculate a variance-covariance matrix for each of the multiple data sets. For example, a method of estimating a variance-covariance matrix common to multiple data sets by the sum of variance-covariance related to all the data sets and a virtual correlation such as a diagonal matrix is conceivable. For an example of the method, specifically, Non-Patent Literature 1 may be referred to.
Even in the above method, it is difficult to accurately calculate the variance-covariance matrix for each of the multiple data sets. For example, an appropriate variance-covariance matrix for a data set is different for each data set. A user tends to desire to calculate a variance-covariance matrix for each data set with consideration of identifying a dependency relationship between variables and performing analysis process for each data set. On the other hand, in the above method, only one variance-covariance matrix common to the multiple data sets is calculated and there is a problem in that the variance-covariance matrix for each of the multiple data sets cannot be individually calculated.
In addition, for example, in the above method, there is a problem in that the processing load and the processing time necessary for calculating one variance-covariance matrix common to multiple data sets increase as the total number of variables increases.
Further, for example, each of the multiple data sets does not necessarily include the value of the same variable. Specifically, it is conceivable that a first data set includes values of two or more first variables, whereas a second data set does not include values of two or more first variables but includes values of two or more second variables. The above method has a problem in that it cannot be applied to a case where multiple data sets include values of two or more variables of different combinations.
As described, in the above method, it is not possible to accurately calculate the variance-covariance matrix for each of multiple data sets.

Therefore, in the present embodiment, an information processing method capable of accurately calculating a variance-covariance matrix for a data set will be described.

In Fig. 1, the information processing device 100 obtains multiple data sets 110. In the example depicted in Fig. 1, the multiple data sets 110 are specifically a data set 111 and a data set 112. The data set 110 includes, for example, multiple pieces of data. The data includes, for example, respective values of any two or more variables of multiple variables.

Specifically, the data set 110 includes multiple pieces of data including respective values of two or more variables of a same combination among multiple variables. Specifically, the multiple data sets 110 include multiple pieces of data including respective values of two or more variables of the same combination among multiple variables. A combination of multiple variables and a combination of two or more variables may be the same, for example. The variable represents, for example, the type of feature value related to a gene.

The information processing device 100 obtains, for example, the data sets 110 of similar types. The type represents, for example, an attribute of the data set 110. The type specifically represents which to cancer patient the data set 110 relates. For example, two or more types indicating that the data set 110 relates to any cancer patient are treated as two or more similar types. For example, a type indicating that the data set 110 relates to a cancer patient in the medical field and a type indicating that the data set 110 relates to a defective product in the manufacturing field are treated as two dissimilar types. Each of the multiple data sets 110 is, for example, a data set 110 related to a cancer patient. The multiple data sets 110 include, for example, a data set 110 related to a lung cancer patient, a data set 110 related to a colon cancer patient, and a data set 110 related to a gastric cancer patient.

(1-1) The information processing device 100 obtains variance-covariance 120 in each of the obtained data sets 110. The variance-covariance is an inner product of a matrix X corresponding to the data set 110 and a transposed matrix $X^T$ of the matrix X. The matrix X is a matrix in which each row represents data and each column represents a variable. The matrix X represents the value of the j-th variable of the i-th data by a component of the i-th row and the j-th column. In the example depicted in Fig. 1, specifically, the information processing device 100 obtains a variance-covariance 121 in the data set 111 by calculating the variance-covariance 121. Specifically, the information processing device 100 obtains a variance-covariance 122 in the data set 112 by calculating the variance-covariance 122.

(1-2) Based on the obtained variance-covariance 120, the information processing device 100 calculates a combination of a first matrix 130 and a second matrix 140 corresponding to a variance-covariance matrix 150 in each of the multiple data sets 110.

The first matrix 130 represents orthogonal components common to the variance-covariance matrices 150 in each of the multiple data sets 110. For example, one first matrix 130 exists for all of the multiple data sets 110. The first matrix 130 is, for example, a matrix having the number of rows and the number of columns equal to the total number of variables. The second matrix 140 represents a dependency relationship between variables among multiple variables. For example, one second matrix 140 exists for each data set 110. The second matrix 140 is, for example, a diagonal matrix having the number of rows and the number of columns equal to the total number of variables.

For example, the information processing device 100 sets a mathematical expression including a variable corresponding to the variance-covariance matrix 150 in each of the multiple data sets 110 based on the obtained variance-covariance 120. The variable is, for example, an inverse matrix of the variance-covariance matrix 150. In the mathematical expression, the variance-covariance matrix 150 is defined by, for example, an inner product of the first matrix 130, the second matrix 140 corresponding to the variance-covariance matrix 150, and a transposed matrix of the first matrix 130. The mathematical expression includes, for example, the variance-covariance 120 in each of the multiple data sets 110. The mathematical expression represents, for example, an objective function.

The information processing device 100 calculates a combination of the first matrix 130 and the second matrix 140 corresponding to the variance-covariance matrix 150 in each of the multiple data sets 110 by solving the set mathematical expression using a solver. The solver is, for example, an optimization solver. In the example depicted in Fig. 1, specifically, the information processing device 100 calculates a combination of the first matrix 130, the second matrix 141 corresponding to the variance-covariance matrix 151 in the data set 111, and the second matrix 142 corresponding to the variance-covariance matrix 152 in the data set 112.

Accordingly, the information processing device 100 may accurately calculate the variance-covariance matrix 150 in each of the multiple data sets 110. For example, the information processing device 100 may accurately calculate the variance-covariance matrix 150 based on a combination of the first matrix 130 and the second matrix 140 corresponding to the variance-covariance matrix 150 in each of the multiple data sets 110.

For example, when calculating the variance-covariance matrix 150 in any one of the multiple data sets 110 using the first matrix 130 common to the multiple data sets 110, the information processing device 100 may obtain information included in another data set 110. For example, when calculating the variance-covariance matrix 150 in each of the multiple data sets 110 using the individual second matrix for each data set 110, the information processing device 100 may calculate the individual variance-covariance matrix 150 for each data set 110.

As described, the information processing device 100 may calculate the variance-covariance matrix 150 in each of the multiple data sets 110, for example, instead of one variance-covariance matrix common to the multiple data sets 110. For example, the information processing device 100 may improve the accuracy of calculating the variance-covariance matrix 150 in each of the multiple data sets 110.

Here, while a case in which the first matrix 130 is a matrix having the number of rows and the number of columns equal to the total number of variables and the second matrix 140 is a diagonal matrix having the number of rows and the number of columns equal to the total number of variables has been described, the present invention is not limited hereto. For example, the first matrix 130 may be a matrix having rows corresponding in number to the total number of variables and columns corresponding in number to a first number less than the total number of variables, and the second matrix 140 may be a diagonal matrix having rows and columns each corresponding in number to the first number.

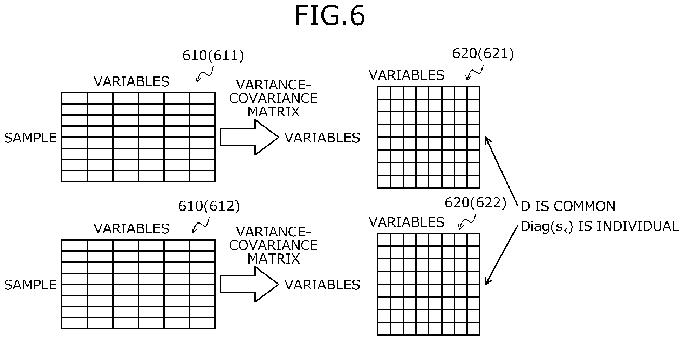

In this case, in the mathematical expression, the variance-covariance matrix 150 may be preferably defined by a sum obtained by adding a predetermined diagonal matrix to an inner product of the first matrix 130, the second matrix 140 corresponding to the variance-covariance matrix 150, and a transposed matrix of the first matrix 130. The predetermined diagonal matrix is, for example, a single matrix that is common to the multiple data sets 110 and has rows and columns corresponding in number to the total number of variables. Accordingly, even when the total number of variables is large, the information processing device 100 may suppress an increase in the processing load and processing time necessary to calculate the variance-covariance matrix 150 in each of the multiple data sets 110. A specific example of operation of the information processing device 100 in this case will be described later with reference to Fig. 6.

Here, while a case in which the multiple data sets 110 include multiple pieces of data each having values of two or more variables of the same combination among multiple variables has been described, the present invention is not limited hereto. For example, the multiple data sets 110 may include multiple pieces of data including respective values of two or more variables of different combinations, among the multiple variables. Specifically, in some cases, each of the multiple pieces of data in any data set 110 may not include, among multiple variables, the respective values of variables corresponding in number to the second number.

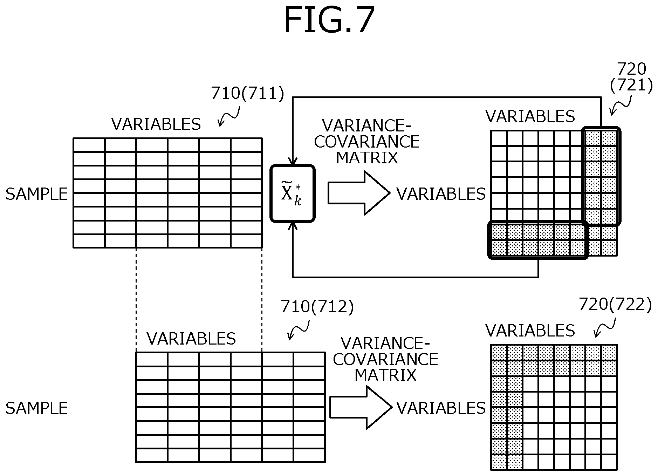

In this case, the information processing device 100 may preferably calculate a combination of the first matrix 130 and the second matrix 140, and respective values of variables of the second number and corresponding to each of the multiple pieces of data in any data set 110. Accordingly, the information processing device 100 may also be applied to a case where the multiple data sets 110 include multiple pieces of data including respective values of two or more variables of different combinations, among multiple variables. The information processing device 100 may accurately calculate the variance-covariance matrix 150 in each of the multiple data sets 110. A specific example of the operation of the information processing device 100 in this case will be described later with reference to Fig. 7.

Here, while a case in which functions of the information processing device 100 are realized by a single computer has been described, the present invention is not limited hereto. For example, functions of the information processing device 100 may be realized by cooperation of multiple computers. For example, functions of the information processing device 100 may be implemented on a cloud.

(Example of Information Processing System 200)

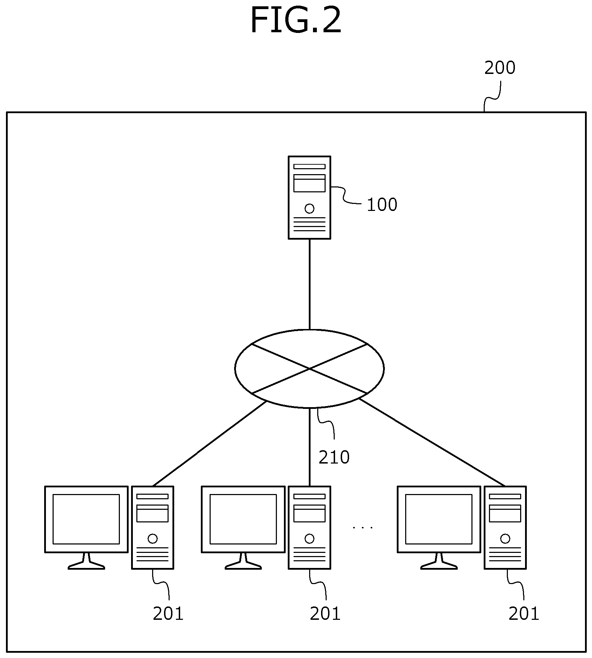

Next, an example of an information processing system 200 to which the information processing device 100 depicted in Fig. 1 is applied will be described with reference to Fig. 2.

Fig. 2 is an explanatory diagram depicting an example of the information processing system 200. In Fig. 2, the information processing system 200 includes the information processing device 100 and one or more client devices 201.

In the information processing system 200, the information processing device 100 and the client device 201 are connected via a wired or wireless network 210. The network 210 is, for example, a local area network (LAN), a wide area network (WAN), the Internet, or the like.

The information processing device 100 is a computer for calculating a variance-covariance matrix for a data set. The data set includes multiple pieces of data. The data includes respective values of two or more variables among multiple variables. The data set includes, for example, multiple pieces of data including respective values of two or more specific variables. The data sets include, for example, multiple pieces of data including respective values of two or more variables of the same combination, among multiple variables. The multiple data sets may include, for example, multiple pieces of data including respective values of two or more variables of different combinations among multiple variables.

For example, the information processing device 100 collects multiple data sets from one or more client devices 201. Specifically, the information processing device 100 collects multiple data sets by receiving the multiple data sets from one client device 201. Specifically, the information processing device 100 may collect the multiple data sets by receiving a data set from each of the client devices 201.

For example, the information processing device 100 obtains variance-covariance in each of the collected data sets. Based on the obtained variance-covariance, the information processing device 100 calculates a combination of the first matrix and the second matrix corresponding to the variance-covariance matrix in each of the multiple data sets. The first matrix represents orthogonal components common to variance-covariance matrices in each of the multiple data sets.

For example, one first matrix exists for all of the multiple data sets. The second matrix represents a dependency relationship between variables among multiple variables. For example, one second matrix exists for each data set.

Specifically, based on the obtained variance-covariance, the information processing device 100 sets a mathematical expression including a variable corresponding to the variance-covariance matrix in each of the multiple data sets. The variable is, for example, an inverse matrix of the variance-covariance matrix. In the mathematical expression, specifically, the variance-covariance matrix may be defined by an inner product of a first matrix, a second matrix corresponding to the variance-covariance matrix, and a transposed matrix of the first matrix. In this case, the first matrix is, for example, a matrix having a number of rows and a number of columns equal to the total number of variables. The second matrix is, for example, a diagonal matrix having a number of rows and a number of columns equal to the total number of variables. The mathematical expression includes, for example, variance-covariance in each of the multiple data sets. The mathematical expression represents, for example, an objective function.

In the mathematical expression, specifically, the variance-covariance matrix may be defined by a sum obtained by adding a predetermined diagonal matrix to an inner product of a first matrix, a second matrix corresponding to the variance-covariance matrix, and a transposed matrix of the first matrix. The predetermined diagonal matrix is, for example, a single matrix that is common to the multiple data sets and has a number of rows and a number of columns equal to the total number of variables. In this case, the first matrix is, for example, a matrix having a number of rows equal to the total number of variables and a number of columns equal to a first number less than the total number of variables. The second matrix is, for example, a diagonal matrix having the first number of rows and the first number of columns.

For example, the information processing device 100 calculates a combination of the first matrix and the second matrix corresponding to the variance-covariance matrix in each of the multiple data sets by solving the set mathematical expression using a predetermined solver. Further, for example, there may be a case where each of the multiple pieces of data in any data set does not include the value of each of a second number of variables among multiple variables, the second number being less than the total number of variables. In this case, the information processing device 100 may calculate a combination of the first matrix and the second matrix, and respective values of the second number of variables corresponding to each of the multiple pieces of data in any data set.

The information processing device 100 identifies a variance-covariance matrix in each of the multiple data sets, based on the calculated combination. The information processing device 100 outputs the identified variance-covariance matrix so that the user may refer to the variance-covariance matrix. The information processing device 100 is, for example, a server or a PC.

Each of the one or more client devices 201 is a computer for providing a data set to the information processing device 100. The client devices 201 transmit one or more data sets to the information processing device 100 based on, for example, an operation input of a user. The client devices 201 are, for example, PCs, tablet terminals, or smartphones.

Here, while a case in which the information processing device 100 is a computer different from the client devices 201 has been described, the present invention is not limited hereto. For example, the information processing device 100 may have a function of a client device 201 and may also operate as a client device 201.

(Application Example of Information Processing System 200)

The information processing system 200 may be applied to, for example, the medical field. For example, in the medical field, the information processing system 200 may calculate a variance-covariance matrix in each of multiple data sets related to genes of different cancer patients. According to the information processing system 200, it is possible to efficiently investigate genes causing different cancers.

Further, the information processing system 200 may be applied to, for example, a manufacturing field. For example, in a manufacturing field, the information processing system 200 may calculate a variance-covariance matrix in each of multiple data sets related to components forming different products. According to the information processing system 200, it is possible to efficiently investigate components that cause products to be defective among different products.

(Example of Hardware Configuration of Information Processing Device 100)

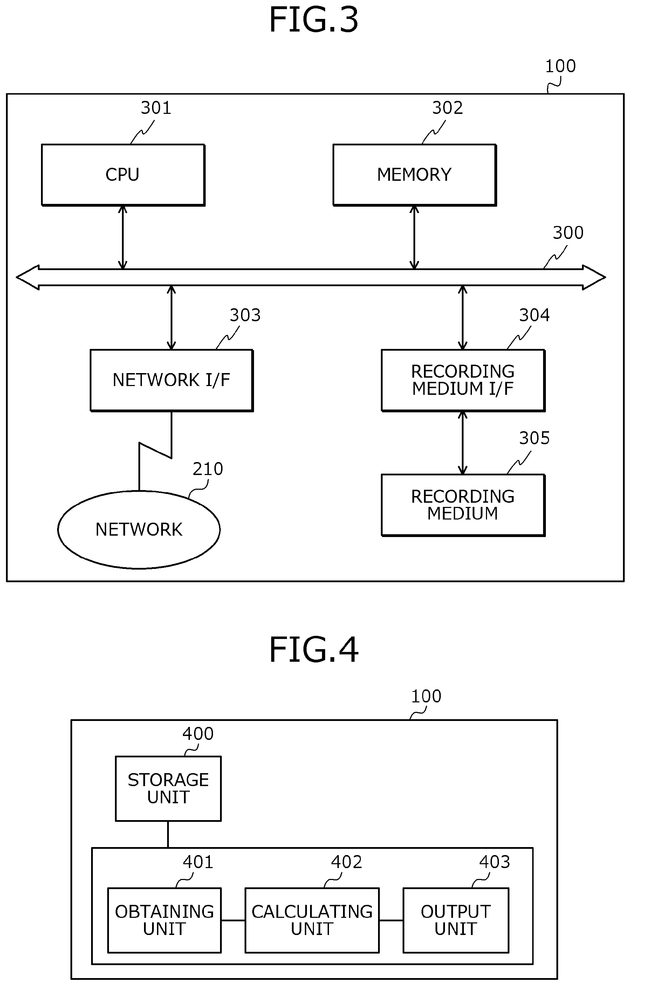

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random-access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

(Example of Hardware Configuration of Client Device 201)

An example of a hardware configuration of the client device 201 is a same as the example of the hardware configuration of the information processing device 100 depicted in Fig. 3 and thus, description thereof is omitted.

(Example of Functional Configuration of Information Processing Device 100)

Next, an example of a functional configuration of the information processing device 100 will be described with reference to Fig. 4.

Fig. 4 is a block diagram depicting an example of a functional configuration of the information processing device 100. The information processing device 100 includes a storage unit 400, an obtaining unit 401, a calculating unit 402, and an output unit 403.

The storage unit 400 is realized by, for example, a storage area such as the memory 302 or the recording medium 305 depicted in Fig. 3. Hereinafter, while a case where the storage unit 400 is included in the information processing device 100 will be described, the present invention is not limited hereto. For example, the storage unit 400 may be included in a device different from the information processing device 100, and stored content of the storage unit 400 may be referred to from the information processing device 100.

The obtaining unit 401 to the output unit 403 function as an example of a controller. Specifically, the functions of the obtaining unit 401 to the output unit 403 are realized, for example, by causing the CPU 301 to execute a program stored in a storage area such as the memory 302 or the recording medium 305 depicted in Fig. 3 or by the network I/F 303. Processing results of the functional units are stored to, for example, a storage area such as the memory 302 or the recording medium 305 depicted in Fig. 3.

The storage unit 400 stores therein various types of information referred to or updated in the processes by the functional units. The storage unit 400 stores, for example, multiple data sets. The data sets include, for example, multiple pieces of data including values of any two or more variables among multiple variables. Variables relate to, for example, genes. The two or more variables may be, for example, multiple variables. The storage unit 400 stores, for example, multiple data sets in which data including respective values of two or more variables of the same combination are collected. The storage unit 400 may store, for example, multiple data sets in which data including respective values of two or more variables of different combinations are collected. The data sets are obtained by, for example, the obtaining unit 401.

The obtaining unit 401 obtains various types of information used in the processes by the functional units. The obtaining unit 401 stores the obtained various types of information to the storage unit 400 or outputs the obtained various types of information to the functional units. In addition, the obtaining unit 401 may output various types of information stored in the storage unit 400 to the functional units. The obtaining unit 401 obtains various types of information based on, for example, an operation input of a user. For example, the obtaining unit 401 may receive various types of information from a device different from the information processing device 100.

The obtaining unit 401 obtains, for example, multiple data sets. Specifically, the obtaining unit 401 obtains multiple data sets by receiving the multiple data sets from another computer. Specifically, the obtaining unit 401 may obtain multiple data sets by receiving an input of the multiple data sets, based on an operation input of a user.

The obtaining unit 401 may receive a start trigger for starting a process of any of the functional units. The start trigger is, for example, a predetermined operation input by the user. The start trigger may be, for example, reception of

EP 4 756 649 A1

predetermined information from another computer. The start trigger may be, for example, output of predetermined information by any functional unit. For example, the obtaining unit 401 regards obtaining the data sets as a start trigger for starting a process of the calculating unit 402.

The calculating unit 402 obtains variance-covariance in each of the obtained data sets. The variance-covariance is an inner product of a matrix X corresponding to the data set 110 and a transposed matrix $X^T$ of the matrix X. The matrix X is a matrix in which rows represent data and columns represent variables. The matrix X represents the value of the j-th variable of the i-th data by a component of the i-th row and the j-th column.

For example, the calculating unit 402 obtains variance-covariance in each of the multiple data sets by calculating the variance-covariance. Specifically, the calculating unit 402 calculates an inner product $X_k X_k^T$ of a matrix $X_k$ corresponding to the k-th data set and a transposed matrix $X_k^T$ of the matrix $X_k$ as a variance-covariance in the k-th data set. As a result, the calculating unit 402 may obtain information to be used when calculating the variance-covariance matrix in each of the multiple data sets.

The calculating unit 402 calculates a combination of the first matrix and the second matrix corresponding to the variance-covariance matrix in each of the multiple data sets, based on the obtained variance-covariance in each of the multiple data sets. The first matrix represents, for example, an orthogonal component common to variance-covariance matrices in the multiple data sets. For example, a single first matrix exists for all of the multiple data sets. The second matrix represents, for example, a dependency relationship between variables among multiple variables. There is one second matrix for each data set.

For example, the calculating unit 402 sets a mathematical expression including a variable corresponding to the variance-covariance matrix in each of the multiple data sets, based on the variance-covariance in each of the obtained data sets. The mathematical expression represents, for example, an objective function. Specifically, the mathematical expression includes the variance-covariance in each of the multiple data sets and represents an objective function according to a multivariate normal distribution. The variable represents, for example, an inverse matrix of a variance-covariance matrix. An inverse matrix of a variance-covariance matrix is also referred to as a precision matrix.

Here, for example, a case is considered where the first matrix is defined as a matrix having a number of rows and a number of columns equal to the total number of variables, and the second matrix is defined as a diagonal matrix having a number of rows and a number of columns equal to the total number of variables. In this case, the variance-covariance matrix may be preferably defined by, for example, an inner product of the first matrix, the second matrix corresponding to the variance-covariance matrix, and a transposed matrix of the first matrix.

Here, for example, it is conceivable that the first matrix is defined as a matrix having a number of rows equal to the total number of variables and a number of columns equal to the first number that is less than the total number of variables, and the second matrix is defined as a diagonal matrix having a number of rows and a number of columns equal to the first number. In this case, for example, the variance-covariance matrix may be preferably defined by a sum obtained by adding a predetermined diagonal matrix having a number of rows and a number of columns equal to the total number of variables to an inner product of the first matrix, the second matrix corresponding to the variance-covariance matrix, and the transposed matrix of the first matrix. The predetermined diagonal matrix is common to the variance-covariance matrices in the multiple data sets, for example.

The calculating unit 402 calculates a combination of the first matrix and the second matrix corresponding to the variance-covariance matrix in each of the multiple data sets by calculating a precision matrix that minimizes the objective function represented by the set mathematical expression using, for example, a gradient descent method. Thus, the calculating unit 402 may identify the variance-covariance matrix in each of the multiple data sets.

Further, for example, it is conceivable that at least one data set of the multiple data sets includes multiple pieces of data that do not include respective values of the second number of variables, among the multiple variables. The second number is less than the total number of variables. In this case, the calculating unit 402 calculates, for example, the combination and the value of each of the second number of variables corresponding to each of the multiple pieces of data in any data set. The combination is the first matrix and the second matrix corresponding to the variance-covariance matrix in each of the multiple data sets. Thus, the calculating unit 402 may identify the variance-covariance matrix in each of the multiple data sets.

The calculating unit 402 identifies the variance-covariance matrix in each of the multiple data sets based on the calculated combination. Thus, the calculating unit 402 may use the variance-covariance matrix in each of the multiple data sets.

The output unit 403 outputs a processing result of at least one of the functional units. The output format is, for example, display on a display, print output to a printer, transmission to an external device by the network I/F 303, or storage in a storage area such as the memory 302 or the recording medium 305. Thus, the output unit 403 may notify the user of the processing result of at least one of the functional units, and the convenience of the information processing device 100 may be improved.

The output unit 403 outputs, for example, the combination calculated by the calculating unit 402. Specifically, the output unit 403 outputs the combination calculated by the calculating unit 402 so that the user may refer to the combination.

8

Specifically, the output unit 403 transmits the combination calculated by the calculating unit 402 to another computer. Thus, the output unit 403 may make the combination calculated by the calculating unit 402 available externally.

The output unit 403 outputs, for example, a variance-covariance matrix in each of the multiple data sets. Specifically, the output unit 403 outputs the variance-covariance matrix in each of the multiple data sets so that the user may refer to the variance-covariance matrix. Specifically, the output unit 403 transmits the variance-covariance matrix in each of the multiple data sets to another computer. Thus, the output unit 403 may make the variance-covariance matrix in each of the multiple data sets available externally, for example.

(First Operation Example of Information Processing Device 100)

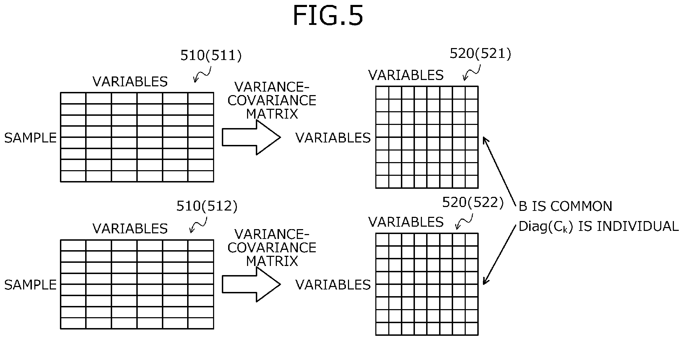

Next, a first operation example of the information processing device 100 will be described with reference to Fig. 5.

Fig. 5 is an explanatory diagram depicting a first operation example of the information processing device 100. In Fig. 5, the information processing device 100 obtains multiple data sets 510 in which data including values of x variables of the same combination are collected. The data sets 510 include multiple pieces of data. The total number of variables is x. In the example depicted in Fig. 5, specifically, the information processing device 100 obtains a data set 511 and a data set 512.

Here, it is desired to individually calculate a variance-covariance matrix 520 in each of the multiple data sets 510. In the example depicted in Fig. 5, specifically, it is desired to individually calculate a variance-covariance matrix 521 in the data set 511 and a variance-covariance matrix 522 in the data set 512.

In the example depicted in Fig. 5, the variance-covariance matrix 520 corresponding to the k-th data set 510 is defined by the following formula (1). Here, $\Phi_k$ is a first variable representing the variance-covariance matrix 520 corresponding to the k-th data set 510. B is a matrix representing orthogonal components common to the variance-covariance matrices 520 in the multiple data sets 510. B is a matrix having a number of rows and a number of columns corresponding to a total number x of variables. $\mathrm{Diag}(c_k)$ is a diagonal matrix having a number of rows and a number of columns equal to the total number x of variables. $c_k$ is the value of the diagonal element.

$$\Phi_k = B \mathrm{Diag}(c_k) B^T \quad \dots (1)$$

The information processing device 100 calculates a combination of B and $\mathrm{Diag}(c_k)$ in a case where the variance-covariance matrix 520 corresponding to the k-th data set 510 is defined by formula (1). The information processing device 100 stores, for example, an objective function represented by the following expression (2). Here, $\Sigma$ is a second variable representing the variance-covariance matrix 520. X is a matrix representing the data set 510. $XX^T$ is the variance-covariance corresponding to dataset 510.

$$\frac{1}{N} tr\left(\Sigma^{-1} X X^T\right) - log\left(|\Sigma^{-1}|\right) \quad \dots (2)$$

Specifically, the information processing device 100 stores an objective function obtained by applying $\Phi_k$ represented by the above formula (1) to $\Sigma$ in the above expression (2) and substituting $X_k$ corresponding to the k-th data set 510 for X in the above expression (2). The information processing device 100 solves the optimization problem using a solver so as to minimize the value of the objective function, thereby calculating a combination of B and $\mathrm{Diag}(c_k)$ in the above formula (1) for $\Phi_k$. The information processing device 100 calculates $\Phi_k$ represented by the above formula (1) based on the calculated combination. Accordingly, the information processing device 100 may individually calculate the variance-covariance matrix 520 in each of the multiple data sets 510.

(Second Operation Example of Information Processing Device 100)

Next, a second operation example of the information processing device 100 will be described with reference to Fig. 6.

Fig. 6 is an explanatory diagram depicting a second operation example of the information processing device 100. In Fig. 6, the information processing device 100 obtains multiple data sets 610 in which multiple pieces of data including values of x variables of the same combination are collected. The data sets 610 include multiple pieces of data. The total number of variables is x. In the example depicted in Fig. 6, specifically, the information processing device 100 obtains a data set 611 and a data set 612.

Here, it is desired to individually calculate a variance-covariance matrix 620 in each of the multiple data sets 610. In the example depicted in Fig. 6, specifically, it is desired to individually calculate a variance-covariance matrix 621 in the data set 611 and a variance-covariance matrix 622 in the data set 612.

In the example depicted in Fig. 6, the variance-covariance matrix 620 corresponding to the k-th data set 610 is defined by the following formula (3). Here, $\Phi_k$ is a first variable representing the variance-covariance matrix 620 corresponding to the k-th data set 610. D is a matrix representing orthogonal components common to the variance-covariance matrices 620 in the multiple data sets 610. D is a matrix having a number of rows equal to the total number x of variables and a number of columns corresponding to a number y that is less than the total number x of variables. Diag($c_k$) is a diagonal matrix having y rows and y columns. $S_k$ is the value of a diagonal element. I is a diagonal matrix representing virtual components common to the variance-covariance matrices 620 in each of the multiple data sets 610. $\varepsilon$ is a coefficient for I. $\varepsilon$ may be different for each data set 610.

$$\Phi_k = \mathrm{DDiag}(s_k)\mathrm{D}^T + \epsilon\mathrm{I} \quad \ldots (3)$$

The information processing device 100 calculates a combination of D and Diag($s_k$) in a case where the variance-covariance matrix 620 corresponding to the k-th data set 610 is defined by formula (3). For example, the information processing device 100 applies $\Phi_k$ represented by the above formula (3) to $\Sigma$ in the following expression (4) and solves the optimization problem so as to minimize the value of the objective function represented by the following expression (4), thereby calculating a combination of D and Diag($s_k$) forming $\Phi_k$ represented by the above formula (3). Here, $\Sigma$ is a second variable representing the variance-covariance matrix 620. X is a matrix representing the data set 610. $XX^T$ is the variance-covariance corresponding to data set 610. $\rho$ is a coefficient.

$$\frac{1}{N}tr(\Sigma^{-1}XX^T) - log(|\Sigma^{-1}|) + \rho\|\Sigma^{-1}\|_1 \quad \ldots (4)$$

Specifically, the information processing device 100 may store an objective function represented by the following formula (5). K is the total number of data sets 610. $L_k$ is defined by the following formula (6). $\beta$ is a coefficient. $E_k$ is an inter-distribution distance and is defined by the following formula (7). V is a constant. $\Phi_k$ is defined by the following formula (8) for each data set 610 in accordance with the above formula (3). $\varepsilon_k$ is a coefficient for I corresponding to the kth data set 610. tr() is the symbol of the diagonal sum.

$$\mathcal{L} = \sum_{k=1}^{K} L_k \quad \ldots (5)$$

$$L_k = \frac{1}{N_k}tr(\Sigma_k^{-1}X_kX_k^T) - log(|\Sigma_k^{-1}|) + \rho\|\Sigma_k^{-1}\|_1 + 2\beta E_k \quad \ldots (6)$$

$$E_k = \frac{1}{2}\left[log\frac{|\Sigma_k|}{|\Phi_k|} + tr(\Sigma_k^{-1}\Phi_k) - V\right] \quad \ldots (7)$$

$$\Phi_k = \mathrm{DDiag}(s_k)\mathrm{D}^T + \epsilon_k\mathrm{I} \quad \ldots (8)$$

Specifically, the information processing device 100 calculates an initial solution of $\Sigma_k$ in formulae (5) to (8) based on $X_k$ corresponding to the k-th data set 510. The initial solution is defined, for example, based on the variance-covariance $X_kX_k^T$ and a diagonal matrix having imaginary components. For a method of calculating the initial solution, for example, Non-Patent Literature 1 may be referred to.

Next, specifically, the information processing device 100 calculates a solution of a combination of D and Diag($s_k$) in the above formula (8) representing $\Phi_k$, by solving the optimization problem so as to minimize the objective function represented by the above formula (5) in a state where $\Sigma_k$ is fixed to the calculated initial solution. Thereafter, specifically, the information processing device 100 may repeatedly perform a first process of calculating the next solution of $\Sigma_k$ and a second process of calculating the next solution of the combination of D and Diag($s_k$).

The first process is a process of calculating the next solution of $\Sigma_k$ by solving the optimization problem so as to minimize the objective function represented by the above formula (5) in a state where the combination of D and Diag($s_k$) is fixed to the solution calculated immediately before. The second process is a process of calculating the next solution of the combination of D and Diag($s_k$) by solving the optimization problem so as to minimize the objective function represented by the above formula (5) in a state where $\Sigma_k$ is fixed to the solution calculated immediately before.

After repeatedly performing the first process and the second process a predetermined number of times, the information processing device 100 calculates $\Phi_k$ represented by the above formula (8) based on the combination of D and Diag($s_k$) calculated last. Accordingly, the information processing device 100 may accurately calculate the combination of D and Diag($s_k$).

As described, the information processing device 100 may individually calculate the variance-covariance matrix 520 in each of the multiple data sets 510. The information processing device 100 may be applied to a case where the number of columns of D is less than the total number x of variables, and may reduce the processing load and the processing time necessary to individually calculate the variance-covariance matrix 520 in each of the multiple data sets 510.

(Third Operation Example of Information Processing Device 100)

Next, a third operation example of the information processing device 100 will be described with reference to Figs. 7 to 9.

Figs. 7, 8, and 9 are explanatory diagrams depicting a third operation example of the information processing device 100. In Fig. 7, the information processing device 100 obtains multiple data sets 710 in which pieces of data including respective values of $x_k$ variables of different combinations among x variables are collected.

$x_k$ represents the number of variables whose values are included in each of the multiple pieces of data in the k-th data set 710, among the x variables. $x_k$ may be different for each data set 710. In the following description, in the data sets 710, a variable whose value is not included in each of multiple pieces of data may be referred to as an "unobserved variable". The data sets 710 include multiple pieces of data. The total number of variables is x. In the example depicted in Fig. 7, specifically, the information processing device 100 obtains a data set 711 and a data set 712.

Here, it is desired to individually calculate the variance-covariance matrix 720 in each of the multiple data sets 710. In the example depicted in Fig. 7, specifically, it is desired to individually calculate a variance-covariance matrix 721 in the data set 711 and a variance-covariance matrix 722 in the data set 712.

In the example depicted in Fig. 7, the variance-covariance matrix 720 corresponding to the k-th data set 710 is defined by the following formula (9). Here, $\Phi_k$ is a first variable representing the variance-covariance matrix 720 corresponding to the k-th data set 710. D is a matrix representing orthogonal components common to the variance-covariance matrices 720 in the multiple data sets 710. D is a matrix having a number of rows equal to the total number x of variables and a number of columns corresponding to the number y less than the total number x of variables.

Diag($c_k$) is a diagonal matrix having y rows and y columns. $S_k$ is the value of a diagonal element. I is a diagonal matrix representing virtual components common to the variance-covariance matrices 720 in each of the multiple data sets 710. $\varepsilon$ is a coefficient for I. $\varepsilon$ may be different for each data set 710.

$$\Phi_k = \mathrm{DDiag}(s_k)\mathrm{D}^T + \epsilon\mathrm{I} \quad \dots (9)$$

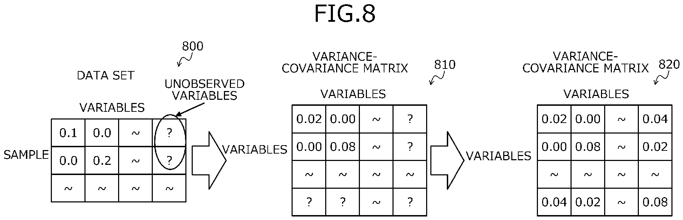

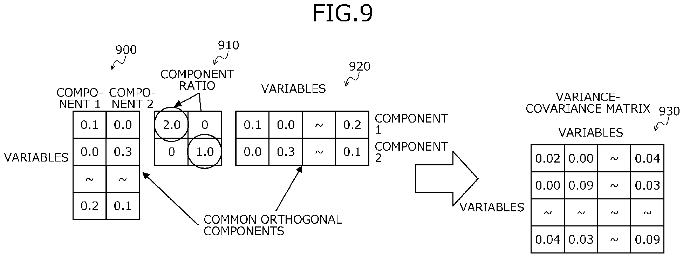

The information processing device 100 calculates a combination of D and Diag($s_k$) and a matrix $\hat{X}_k$ in a case where the variance-covariance matrix 720 corresponding to the k-th data set 710 is defined by the above expression (9). $\hat{X}_k$ represents a value of each of (x-$x_k$) unobserved variables in the k-th data set 710. Next, a specific example in which the information processing device 100 calculates a combination of D and Diag($s_k$) and the matrix $\hat{X}_k$ will be described with reference to Figs. 8 and 9.

In Fig. 8, the information processing device 100 calculates a variance-covariance matrix 810 including an uncertainty value based on a matrix 800 corresponding to x variables including an unobserved variable obtained by combining $X_k$ representing the k-th data set 710 and $\hat{X}_k$. The information processing device 100 calculates an initial solution of a variance-covariance matrix 820 obtained by interpolating an uncertainty value in the variance-covariance matrix 810 with a random value or the like.

In Fig. 9, based on the calculated initial solution of the variance-covariance matrix 820, the information processing device 100 calculates solutions of a matrix 900 to be D, a matrix 910 to be Diag($s_k$), and a transposed matrix 920 of the matrix 900. The information processing device 100 calculates a solution of a variance-covariance matrix 930 by an inner product of the matrix 900 that is the calculated D, the matrix 910 that is Diag($s_k$), and the transposed matrix 920 of the matrix 900. The information processing device 100 repeatedly calculates a combination of D and Diag($s_k$) and the matrix $\hat{X}_k$ so that the variance-covariance matrix 820 and the variance-covariance matrix 930 are similar to each other.

Specifically, similarly to Fig. 6, the information processing device 100 may repeatedly perform the first process of calculating the next solution of $\Sigma_k$ and the second process of calculating the next solution of the combination of D and

Diag($s_k$) and the next solution of the matrix $\hat{X}_k$. Thus, the information processing device 100 may accurately calculate the combination of D and Diag($s_k$) and the matrix $\hat{X}_k$.

As described, the information processing device 100 may individually calculate the variance-covariance matrix 520 in each of the multiple data sets 510. The information processing device 100 may be applied to a case where the number of columns of D is less than the total number x of variables, and may reduce the processing load and the processing time necessary to individually calculate the variance-covariance matrix 520 in each of the multiple data sets 510. The information processing device 100 may also be applied to a case where there is an unobserved variable.

(Overall Processing Procedure)

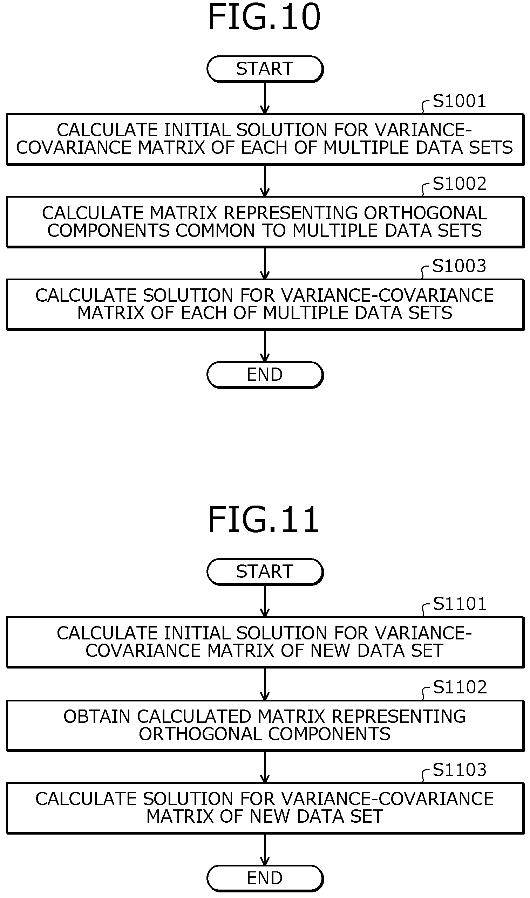

Next, an example of an overall processing procedure executed by the information processing device 100 will be described with reference to Fig. 10. The overall processing is implemented by, for example, the CPU 301, storage areas such as the memory 302 and the recording medium 305, and the network I/F 303 depicted in Fig. 3.

Fig. 10 is a flowchart depicting an example of an overall processing procedure. In Fig. 10, the information processing device 100 calculates an initial solution of a variance-covariance matrix of each of multiple data sets, based on each of the multiple data sets (step S1001). The information processing device 100 calculates a matrix representing orthogonal components common to the variance-covariance matrices of the multiple data sets, based on the calculated initial solution (step S1002).

The information processing device 100 calculates a matrix representing a dependency relationship between variables respectively corresponding to the multiple data sets, based on the calculated initial solution and the calculated matrix representing the orthogonal components, and calculates a solution of a variance-covariance matrix of each of the multiple data sets (step S1003). The information processing device 100 ends the entire processing. Thus, the information processing device 100 may calculate the variance-covariance matrix for each data set.

(Additional Processing Procedure)

Next, an example of an addition processing procedure executed by the information processing device 100 will be described with reference to Fig. 11. The addition processing is implemented by, for example, the CPU 301, the storage area such as the memory 302 or the recording medium 305, and the network I/F 303 depicted in Fig. 3.

Fig. 11 is a flowchart depicting an example of an addition processing procedure. In Fig. 11, the information processing device 100 calculates an initial solution of a variance-covariance matrix of a new data set based on the new data set (step S1101). The information processing device 100 obtains a matrix representing orthogonal components common to the variance-covariance matrices of the multiple data sets that have been calculated (step S1102).

The information processing device 100 calculates a matrix representing a dependency relationship between variables corresponding to the new data set, based on the calculated initial solution and the obtained matrix representing the orthogonal components, and calculates a solution of a variance-covariance matrix of the new data set (step S1103). The information processing device 100 ends the addition process. Thus, the information processing device 100 may calculate the variance-covariance matrix corresponding to the new data set.

As described above, according to the information processing device 100, it is possible to obtain multiple data sets each including multiple pieces of data including values of any two or more variables among multiple variables. According to the information processing device 100, it is possible to obtain variance-covariance in each of the obtained data sets. According to the information processing device 100, it is possible to calculate the combination of the first matrix common to the variance-covariance matrices in the multiple data sets and the second matrix corresponding to the variance-covariance matrix in each of the multiple data sets, based on the obtained variance-covariance. Thus, the information processing device 100 may individually calculate the variance-covariance matrix in each of the multiple data sets.

According to the information processing device 100, the first matrix may be set as a matrix having a number of rows and a number of columns equal to the total number of variables. According to the information processing device 100, the second matrix may be set as a diagonal matrix having a number of rows and a number of columns equal to the total number of variables. The information processing device 100 may be applied to a case where a variance-covariance matrix is defined by an inner product of the first matrix, the second matrix corresponding to the variance-covariance matrix, and a transposed matrix of the first matrix. Thus, the information processing device 100 may accurately calculate the variance-covariance matrix in each of the multiple data sets.

According to the information processing device 100, the first matrix may be set as a matrix having a number of rows equal to the total number of variables and a number of columns equal to the first number, which is less than the total number of variables. According to the information processing device 100, it is possible to set the second matrix as a diagonal matrix having a number of rows equal to the first number and a number of columns equal to the first number. The information processing device 100 may be applied to a case where a variance-covariance matrix is defined by a sum obtained by adding a predetermined diagonal matrix to an inner product of the first matrix, the second matrix corresponding to the variance-covariance matrix, and the transposed matrix of the first matrix. Accordingly, the information processing device 100 may reduce the processing load and the processing time necessary to calculate the variance-covariance matrix in each of the multiple data sets.

The information processing device 100 may be applied to a case where at least one data set among multiple data sets includes multiple pieces of data that do not include values of the second number of variables, the second number being less than the total number of variables. According to the information processing device 100, it is possible to calculate the combination and the value of each of the second number of variables corresponding to each of the multiple pieces of data in any data set. Thus, the information processing device may accurately calculate the variance-covariance matrix in each of the multiple data sets even when any of the data sets includes multiple pieces of data that do not include values of some variables.

According to the information processing device 100, the combination may be calculated by calculating the precision matrix that minimizes the objective function including the variance-covariance in each of the obtained data sets according to the multivariate normal distribution. Thus, the information processing device 100 may accurately calculate the variance-covariance matrix in each of the multiple data sets.

According to the information processing device 100, the combination may be calculated by calculating the precision matrix that minimizes the objective function using the gradient descent method. Thus, the information processing device 100 may accurately calculate the variance-covariance matrix in each of the multiple data sets.

According to the information processing device 100, it is possible to output the variance-covariance matrix in each of the multiple data sets based on the calculated combination. Thus, the information processing device 100 may make the variance-covariance matrix in each of the multiple data sets available externally.

The information processing method described in the present embodiment may be implemented by executing a prepared program on a computer such as a personal computer and a workstation. The program is stored on a computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

EXPLANATIONS OF LETTERS OR NUMERALS

    100 Information processing device
    110 to 112, 510 to 512, 610 to 612, 710 to 712 Data set
    120 to 122 Variance-covariance
    130 First matrix
    140 to 142 Second matrix
    150 to 152, 520 to 522, 620 to 622, 720 to 722, 810, 820, 930 Variance-covariance matrix
    200 Information processing system
    201 Client device
    210 Network
    300 Bus
    301 CPU
    302 Memory
    303 Network I/F
    304 Recording medium I/F
    305 Recording medium
    400 Storage unit
    401 Obtaining unit
    402 Calculation unit
    403 Output unit
    800, 900, 910 Matrix
    920 Transposed matrix

**Claims**

**1.** An information processing program for causing a computer to execute a process, the process comprising:

obtaining a plurality of data sets each including a plurality of data including respective values of any two or more variables of a plurality of variables;

obtaining a plurality of variance-covariances respectively in the obtained plurality of data sets; and

calculating, based on the plurality of variance-covariances, a combination of a first matrix representing orthogonal components common to a plurality of variance-covariance matrices respectively in the plurality of data sets and a second matrix for each of the plurality of variance-covariance matrices and representing a dependency relationship between the any two or more variables of the plurality of variables.

2. The information processing program according to claim 1, wherein

the first matrix is a matrix having a number of rows and a number of columns equal to a total number of the plurality of variables,

the second matrix is a diagonal matrix having a number of rows and a number of columns equal to the total number of the plurality of variables, and

the calculating includes calculating the combination for each of the plurality of data sets, when a corresponding one of the plurality of variance-covariance matrices in the each of the plurality of data sets is defined by an inner product of the first matrix, the second matrix corresponding to the corresponding one of the plurality of variance-covariance matrices, and a transposed matrix of the first matrix, the combination being calculated based on the obtained plurality of variance-covariance.

3. The information processing program according to claim 1, wherein

the first matrix is a matrix having a number of rows equal to a total number of the plurality of variables and a number of columns equal to a first number that is less than the total number of the plurality of variables,

the second matrix is a diagonal matrix having a number of rows and a number of columns equal to the first number, and

the calculating includes calculating the combination for each of the plurality of data sets, when a corresponding one of the plurality of variance-covariance matrices in the each of the plurality of data sets is defined by a sum of an inner product of the first matrix, the second matrix corresponding to the corresponding one of the plurality of variance-covariance matrices, and a transposed matrix of the first matrix, and a diagonal matrix that is common to the plurality of variance-covariance matrices in the plurality of data sets and has a number of rows and a number of columns equal to the total number of the plurality of variables, the combination being calculated based on the plurality of variance-covariances.

4. The information processing program according to claim 3, wherein

at least one of the plurality of data sets includes a plurality of data that does not include respective values of a second number of the plurality of variables, the second number being less than the total number of the plurality of variables, and

the calculating includes calculating for the each of the plurality of data sets, the combination and the respective values of the second number of the plurality of variables respectively corresponding to the plurality of data in the at least one of the plurality of data sets, when a corresponding one of the plurality of variance-covariance matrices in the at least one of the plurality of data sets is defined by the sum, the combination and the respective values of the second number of the plurality of variables being calculated based on the plurality of variance-covariances.

5. The information processing program according to any one of claims 2 to 4, wherein the calculating includes calculating according to a multivariate normal distribution, a precision matrix that minimizes an objective function that includes the plurality of variance-covariances respectively in the obtained plurality of data sets, thereby calculating the combination.

6. The information processing program according to claim 5, wherein the calculating includes calculating the precision matrix that minimizes the objective function by using a gradient descent method, thereby calculating the combination.

7. The information processing program according to any one of claims 2 to 4, further comprising outputting the plurality of variance-covariance matrices respectively in the plurality of data sets, based on the calculated combination.

8. An information processing method executed by a computer, the method comprising:

obtaining a plurality of data sets each including a plurality of data including respective values of any two or more variables of a plurality of variables;

obtaining a plurality of variance-covariances respectively in the obtained plurality of data sets; and

calculating, based on the plurality of variance-covariances, a combination of a first matrix representing orthogonal components common to a plurality of variance-covariance matrices respectively in the plurality of data sets and a second matrix for each of the plurality of variance-covariance matrices and representing a dependency relationship between the any two or more variables of the plurality of variables.

9. An information processing device, comprising a controller configured to:

obtain a plurality of data sets each including a plurality of data including respective values of any two or more variables of a plurality of variables;

obtain a plurality of variance-covariances respectively in the obtained plurality of data sets; and

calculate, based on the plurality of variance-covariances, a combination of a first matrix representing orthogonal components common to a plurality of variance-covariance matrices respectively in the plurality of data sets and a second matrix for each of the plurality of variance-covariance matrices and representing a dependency relationship between the any two or more variables of the plurality of variables.

# FIG.1

# FIG.2

# FIG.3

# FIG.4

# FIG.5

510(511)

VARIABLES

SAMPLE

VARIANCE-
COVARIANCE
MATRIX

520(521)

VARIABLES

VARIABLES

510(512)

VARIABLES

SAMPLE

VARIANCE-
COVARIANCE
MATRIX

520(522)

VARIABLES

VARIABLES

B IS COMMON

Diag($C_k$) IS INDIVIDUAL

# FIG.6

610(611)

VARIABLES

VARIANCE-
COVARIANCE
MATRIX

SAMPLE

VARIABLES

620(621)

VARIABLES

VARIABLES

610(612)

VARIABLES

VARIANCE-
COVARIANCE
MATRIX

SAMPLE

VARIABLES

620(622)

VARIABLES

D IS COMMON

Diag($s_k$) IS INDIVIDUAL

# FIG.7

710(711)

VARIABLES

SAMPLE

$\widetilde{X}_k^*$

VARIANCE-
COVARIANCE
MATRIX

VARIABLES

720
(721)

VARIABLES

710(712)

VARIABLES

SAMPLE

VARIANCE-
COVARIANCE
MATRIX

VARIABLES

720(722)

VARIABLES

# FIG.8

DATA SET 800

UNOBSERVED VARIABLES

VARIABLES

| | | | |
|---|---|---|---|
| 0.1 | 0.0 | ~ | ? |
| 0.0 | 0.2 | ~ | ? |
| ~ | ~ | ~ | ~ |

SAMPLE

VARIANCE-COVARIANCE MATRIX 810

VARIABLES

| | | | |
|---|---|---|---|
| 0.02 | 0.00 | ~ | ? |
| 0.00 | 0.08 | ~ | ? |
| ~ | ~ | ~ | ~ |
| ? | ? | ~ | ? |

VARIABLES

VARIANCE-COVARIANCE MATRIX 820

VARIABLES

| | | | |
|---|---|---|---|
| 0.02 | 0.00 | ~ | 0.04 |
| 0.00 | 0.08 | ~ | 0.02 |
| ~ | ~ | ~ | ~ |
| 0.04 | 0.02 | ~ | 0.08 |

VARIABLES

# FIG.9

900

910

COMPONENT
RATIO

920

VARIABLES

VARIANCE-
COVARIANCE MATRIX   930

VARIABLES

| | COMPO-NENT 1 | COMPO-NENT 2 |
|---|---|---|
| VARIABLES | 0.1 | 0.0 |
| | 0.0 | 0.3 |
| | ~ | ~ |
| | 0.2 | 0.1 |

| 2.0 | 0 |
|---|---|
| 0 | 1.0 |

| 0.1 | 0.0 | ~ | 0.2 |
|---|---|---|---|
| 0.0 | 0.3 | ~ | 0.1 |

COMPONENT 1

COMPONENT 2

COMMON ORTHOGONAL
COMPONENTS

VARIABLES

| 0.02 | 0.00 | ~ | 0.04 |
|---|---|---|---|
| 0.00 | 0.09 | ~ | 0.03 |
| ~ | ~ | ~ | ~ |
| 0.04 | 0.03 | ~ | 0.09 |

# FIG.10

```
           START
             │
             ▼                        ┌S1001
┌─────────────────────────────────────────────┐
│  CALCULATE INITIAL SOLUTION FOR VARIANCE-     │
│  COVARIANCE MATRIX OF EACH OF MULTIPLE DATA SETS │
└─────────────────────────────────────────────┘
             │
             ▼                        ┌S1002
┌─────────────────────────────────────────────┐
│  CALCULATE MATRIX REPRESENTING ORTHOGONAL     │
│  COMPONENTS COMMON TO MULTIPLE DATA SETS      │
└─────────────────────────────────────────────┘
             │
             ▼                        ┌S1003
┌─────────────────────────────────────────────┐
│  CALCULATE SOLUTION FOR VARIANCE-COVARIANCE   │
│  MATRIX OF EACH OF MULTIPLE DATA SETS         │
└─────────────────────────────────────────────┘
             │
             ▼
           END
```

# FIG.11

```
           START
             │
             ▼                        ┌S1101
┌─────────────────────────────────────────────┐
│  CALCULATE INITIAL SOLUTION FOR VARIANCE-     │
│  COVARIANCE MATRIX OF NEW DATA SET            │
└─────────────────────────────────────────────┘
             │
             ▼                        ┌S1102
┌─────────────────────────────────────────────┐
│  OBTAIN CALCULATED MATRIX REPRESENTING        │
│  ORTHOGONAL COMPONENTS                        │
└─────────────────────────────────────────────┘
             │
             ▼                        ┌S1103
┌─────────────────────────────────────────────┐
│  CALCULATE SOLUTION FOR VARIANCE-COVARIANCE   │
│  MATRIX OF NEW DATA SET                       │
└─────────────────────────────────────────────┘
             │
             ▼
           END
```

## INTERNATIONAL SEARCH REPORT

| International application No. |
|---|
| **PCT/JP2023/027881** |

**A.     CLASSIFICATION OF SUBJECT MATTER**

*G06F 18/213*(2023.01)i
FI:   G06F18/213

According to International Patent Classification (IPC) or to both national classification and IPC

**B.     FIELDS SEARCHED**

Minimum documentation searched (classification system followed by classification symbols)

G06F18/213

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2016-206784 A (IHI CORP.) 08 December 2016 (2016-12-08)<br>in particular, paragraph [0039] | 1-9 |
| A | CN 103697894 A (NANJING UNIVERSITY OF AERONAUTICS AND ASTRONAUTICS)<br>02 April 2014 (2014-04-02)<br>in particular, paragraph [0084] | 1-9 |

☐ Further documents are listed in the continuation of Box C.          ☑ See patent family annex.

| \*     Special categories of cited documents: | "T"  later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **06 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/027881**

| Patent document cited in search report | | | Publication date (day/month/year) | Patent family member(s) | Publication date (day/month/year) |
|---|---|---|---|---|---|
| JP | 2016-206784 | A | 08 December 2016 | (Family: none) | |
| CN | 103697894 | A | 02 April 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEDOIT, OLIVIER** ; **WOLF, MICHAEL**. A well-conditioned estimator for large-dimensional covariance matrices. *Journal of multivariate analysis*, 2004, vol. 88 (2), 365-411